# EUROPÄISCHE PATENTSCHRIFT

(11) **EP 2 477 829 B1**
(45) Veröffentlichungstag und Bekanntmachung des Hinweises auf die Patenterteilung: **12.03.2014**
(21) Anmeldenummer: 10755105.3
(22) Anmeldetag: 10.09.2010
(51) Int. Cl.: B60J 7/02

(54) **MECHANIK FÜR SCHIEBEDÄCHER**
MECHANISM FOR SLIDING ROOFS
MECANIQUE POUR TOITS COULISSANTS

(30) Priorität: 19.09.2009 DE 102009041903
(43) Veröffentlichungstag der Anmeldung: 25.07.2012
(73) Patentinhaber: BOS GmbH & Co. KG, 73760 Ostfildern (DE)
(72) Erfinder: HEIDAN, Michael, 70569 Stuttgart (DE)
(74) Vertreter: Patentanwälte Ruff, Wilhelm, Beier, Dauster & Partner
(86) Internationale Anmeldenummer: PCT/EP2010/005572
(87) Internationale Veröffentlichungsnummer: WO 2011/032667

(56) Entgegenhaltungen:
- DE-A1- 10 146 285
- DE-A1-102004 014 166
- US-A1- 2002 041 113

## Beschreibung

Die Erfindung betrifft eine Mechanik für Schiebedächer. Die Mechanik ermöglicht es mit nur einem elektrischen Antrieb sowohl einen Deckel als auch einen Sonenschutz zu betätigen. Dabei ist die Mechanik so ausgestaltet, dass nur wenige und auch gleiche Teile eingesetzt werden. Deckel und Sonnenschutz werden entlang des starren Führungselements bewegt und über einen Zwangablauf, mittels kombinierter Koppel- und Rastvorgänge betätigt. Mit dieser Mechanik können beide Teile vollständig geöffnet und geschlossen werden.

Ein dem Oberbegriff des Anspruches 1 entsprechendes Dachöffnungssystem ist aus der DE 10 2004 014 166 B4 bekannt. Bei diesem Dachöffnungssystem sind Rastelemente vorgesehen, welche unterschiedlicher Bauart sind. Es gibt ein Fahrzeugdeckelrastelement und eine Abschattungsführung. Diese können jeweils an das Antriebselement gekoppelt werden.

Aus der DE 101 46 285 A1 ist ein Fahrzeugdach bekannt, welche mindestens einen Deckel in einer Dachöffnung mittels einer Deckelantriebsvorrichtung wahlweise Verschließen und mindestens teilweise Freilegen kann. Das Fahrzeugdach hat im vorderen Bereich des Randes der Dachöffnung einen Windabweiser, welcher eine Stelleinrichtung aufweist, die in einem vorgegebenen Bereich der Deckelverschiebebewegung mit der Deckelantriebsvorrichtung kuppelbar ist. Damit kann der Windabweiser die Ausstellhöhe in Abhängigkeit von der jeweiligen Deckelstellung gezielt verändern. Es wird eine synchrone Bewegung ermöglicht, wobei während der Deckelbewegung der Windabweiser in Abhängigkeit zur jeweiligen Position des Deckels zur Dachöffnung eine vorher definierte Ausstellhöhe einnehmen kann.

Aus der DE 199 44 853 C1 ist eine Antriebsvorrichtung bekannt, für die in vorgegebener Abfolge gegeneinander verstellbare Teile, mit einer Kulissenführung und zugeordnete Mitnehmer für einen entlang der Kulissenführung relativ zu diesen verschiebbaren und gegen diese verkuppelbaren Antriebsschlitten quer zur Vorschubrichtung in eine Verriegelungsposition gegenüber der Kulissenführung verstellbar sind. In vorgegebener Abfolge sollen mit einer Betätigungsvorrichtung Klappverdecke, z. B. für Cabriolett-Fahrzeugen, sowohl geschlossen als auch verriegelt werden. Es wird beschrieben, dass die beschriebene technische Lösung auch für die Kombination von Schiebedach-Windabweiser eingesetzt werden kann. Es wird weiter beschrieben, dass der Windabweiser bei geschlossenem Schiebedach ausgestellt werden kann, was technisch nicht nachvollziehbar ist, da diese Funktion für die Funktion eines Windabweisers nicht logisch ist.

Es ist Aufgabe der vorliegenden Erfindung, ein Dachöffnungssystem der im Oberbegriff des Anspruches 1 angegebenen Art zu schaffen, mit dem es möglich ist, durch sogenannte Gleichteile, mehrere Aufgaben und Funktionen an verschiedenen Positionen der Mechanik zu erfüllen.

Diese Aufgabe wird erfindungsgemäß durch die Merkmale des Patentanspruchs 1 gelöst. Vorteilhafte Ausführungsformen der Erfindung sind den Unteransprüchen zu entnehmen.

Die vorliegende Erfindung gibt ein Mechanik für Schiebedächer für ein Fahrzeug an, die zum Betätigen von mindestens einem Deckel zum Öffnen/Schließen einer Dachöffnung, zum wahlweisen Verschieben und/oder Verschwenken des Deckels, sowie zum Betätigen mindestens eines Sonennschutzes zum Öffnen/Schließen mit nur einem elektrischen Antrieb ausgestattet ist. Zur Komforterhöhung des Schiebedaches wird eine manuelle Betätigung des Abschattungselements vermieden. Die Mechanik besteht zudem aus wenigen Teilen und mehrfach eingesetzten Gleichteilen.

Das erfindungsgemäße Dachöffnungssystem ist zuverlässig, effizient, bedienerfreundlich, sicher, gewichtsreduziert, montage-/servicefreundlich und kostengünstig.

Das erfindungsgemäße Dachöffnungssystem für ein Fahrzeug ist dadurch gekennzeichnet, dass mindestens ein transparenter bzw. teilweise transparenter Fahrzeugdeckel und mindestens ein Abschattungselement, welche jeweils in weiten Bereichen unabhängig voneinander im vorgesehenen Öffnungsbereich bewegbar sind, mit nur einem elektrischen Antrieb betätigt werden. Eine manuelle Betätigung des Abschattungselements ist nicht erforderlich.

Die vorliegende Erfindung ist nicht auf Schiebedächer beschränkt, bei denen der Fahrzeugdeckel unter das Fahrzeugdach und in den Fahrzeuginnenraum bewegt wird. Die beschriebene Erfindung betrifft vielmehr alle Dachöffnungssysteme, z. B. hinlänglich aus dem Stand der Technik bekannte Hubdächer, Schiebehebedächer und Spoilerdächer, die über mindestens einen Fahrzeugdeckel und mindestens einen Sonnenschutz verfügen.

Die vorliegende Erfindung kann zudem auch für Fensterhebersysteme eingesetzt werden, die mit einem elektrischen Antrieb, einer Fensterscheibe und einem Sonnenschutz ausgestattet sind.

Die Erfindung hat den Vorteil, dass sie mit zumindest einer Kulisse, mit zumindest einem Verbindungsteil, welches in der Kulisse und in dem zumindest einem Lager hinten beweglich gelagert ist, mit zumindest einer Deckelbefestigung, welche in dem zumindest einem Lager vorn und dem Verbindungsteil beweglich gelagert ist und mit zumindest einem starren Führungselement ausgebildet ist. Dabei können mit dem zumindest einem Antriebselement zwei Mitnehmer nacheinander und/oder zeitgleich entlang dem zumindest einem starren Führungselement bewegt werden. Das Antriebselement ist symmetrisch ausgebildet und kann sowohl an zwei Mitnehmer gekoppelt, als auch baugleich in beiden starren Führungselementen eines Schiebedaches eingesetzt werden.

Ein weiterer Vorteil ist, dass der Mitnehmer eine Feder, eine Rastnase und eine Aufnahme aufweist.

Ein besonderer Vorteil besteht darin, dass der Mitnehmer mit der Rastnase sowohl in dem starren Führungselement einrasten, als auch an das Antriebselement gekoppelt werden kann.

In einer besonders vorteilhaften Ausgestaltung können durch baugleiche Mitnehmer sowohl der zumindest eine Deckel, als auch der zumindest eine Sonnenschutz betätigt werden.

Eine weitere besondere Ausgestaltung ermöglicht es, dass zumindest vier Mitnehmer verwendet werden können.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine isometrische Gesamtdarstellung der Komponenten der erfindungsgemäßen Mechanik,
- Fig. 2a: eine weitere isometrische Gesamtdarstellung der Komponenten der erfindungsgemäßen Mechanik in einer Grundposition,
- Fig. 2b: eine weitere isometrische Gesamtdarstellung der Komponenten der erfindungsgemäßen Mechanik in einer Zwischenstellung,
- Fig. 2c: eine weitere isometrische Gesamtdarstellung der Komponenten der erfindungsgemäßen Mechanik in einer weiteren Stellung und
- Fig. 3: eine Draufsicht auf das starre Führungselement mit zwei Mitnehmern.

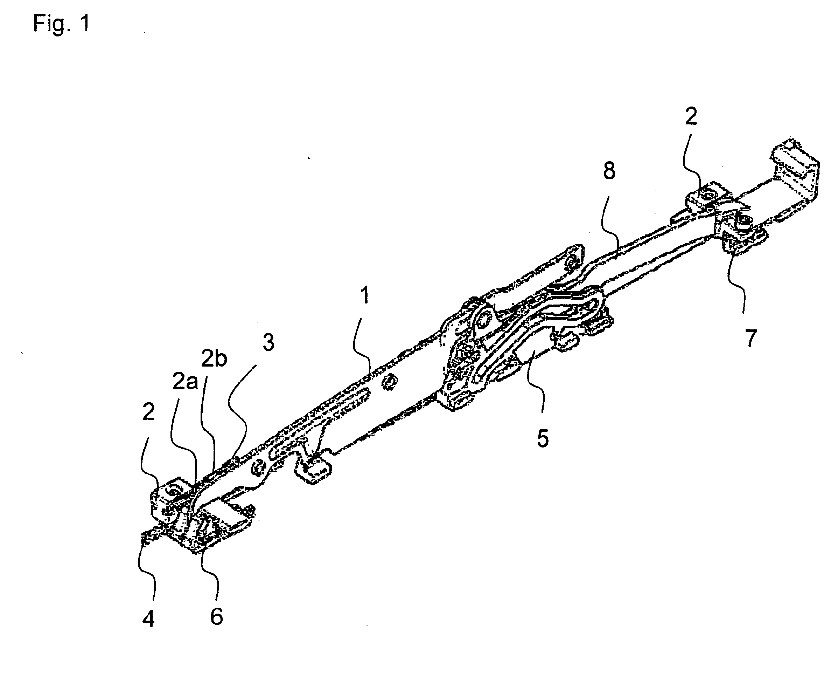

Fig. 1 zeigt eine isonetrische Gesamtdarstellung der Komponenten der erfindungsgemäßen Mechanik. An der Kulisse 5 ist das Verbindungsteil 8 beweglich gelagert. Das Verbindungsteil ist in dem Lager hinten beweglich gelagert. Das Verbindungsteil 8 kann in der Kulisse 5 verschoben werden und folgt dabei einer Kulissenbahn. Die Deckelbefestigung 1 ist über das Verbindungsteil 8 mit der Kulisse 5 verbunden und wird entsprechend der Bewegung des Verbindungsteils 8 bewegt. Die Deckelbefestigung ist in dem Lager vorn drehbar gelagert.

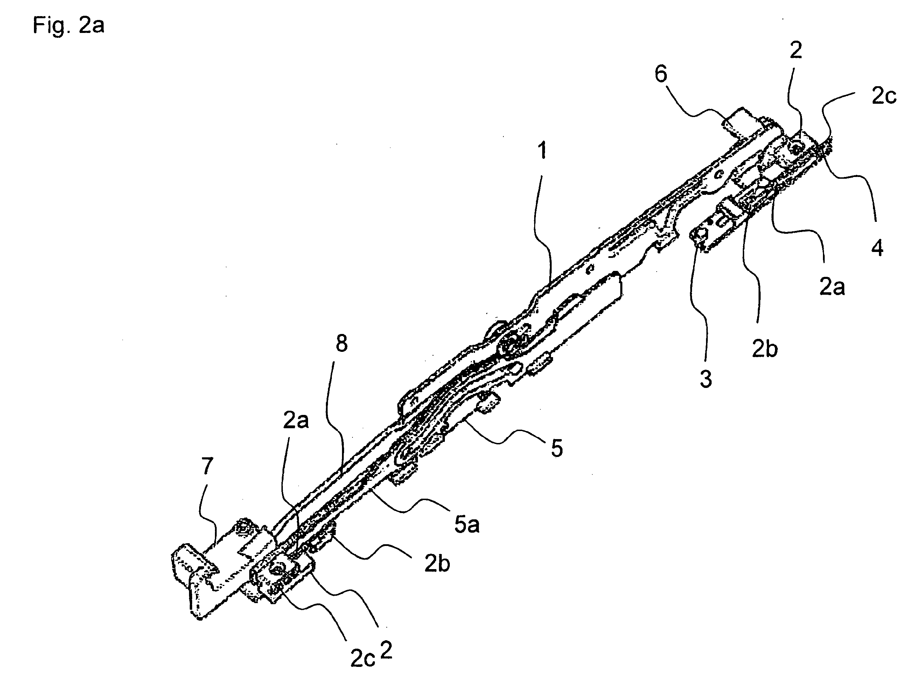

Fig. 2a zeigt eine weitere isometrische Gesamtdarstellung der Komponenten der erfindungsgemäßen Mechanik in einer Grundposition. Das Antriebselement 3 wird von dem Kabel 4, welches eine nicht dargestellte Mitnehmerplombe aufweist, in dem nicht dargestellten starren Führungselement 9 bewegt. Der Mitnehmer 2 weist eine Feder 2a und eine Rastnase 2b auf und ist an das Antriebselement 3 gekoppelt. Der Mitnehmer 2 weist weiterhin eine Aufnahme 2c auf, an welche verschiedene Teile angebunden werden können. In dieser Figur ist beispielsweise ein nicht dargestellter Sonnenschutz angebunden. Am anderen Ende der Mechanik ist ein weiterer Mitnehmer 2 an dem Mitnehmer Deckel 5a angebunden.

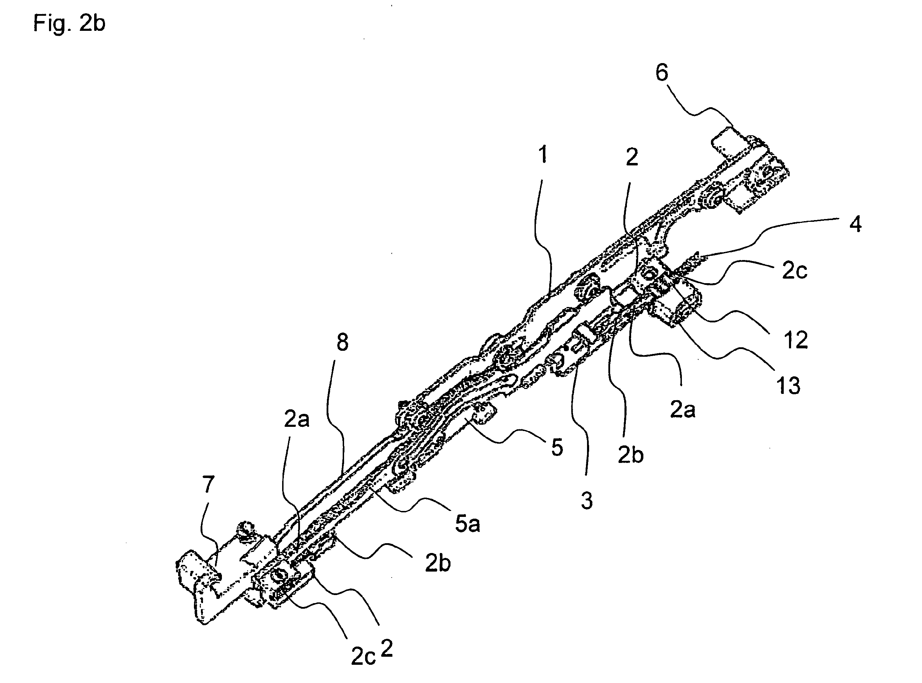

Fig. 2b zeigt eine weitere isometrische Gesamtdarstellung der Komponenten der erfindungsgemäßen Mechanik in einer Zwischenstellung. In dieser Stellung ist dargestellt, wie der eine Mitnehmer 2 durch das Antriebselement 3 bewegt wird. Die Rastnase 2b ist dabei zwischen Antriebselement 3 und dem nicht dargestellten starren Führungselement 9 fixiert. Somit ist der Mitnehmer 2 an das Antriebselement 3 gekoppelt. In dieser Position wird der nicht dargestellter Sonenschutz bewegt. Verbunden ist der nicht dargestellte Sonnenschutz mit dem Mitnehmer 2 über den Mitnehmer Sonnenschutz 13 und dem Verbinder 12. Der weitere Mitnehmer 2 ist noch in der gleichen Position, in dem nicht dargestellten starren Führungselement 9 verrastet.

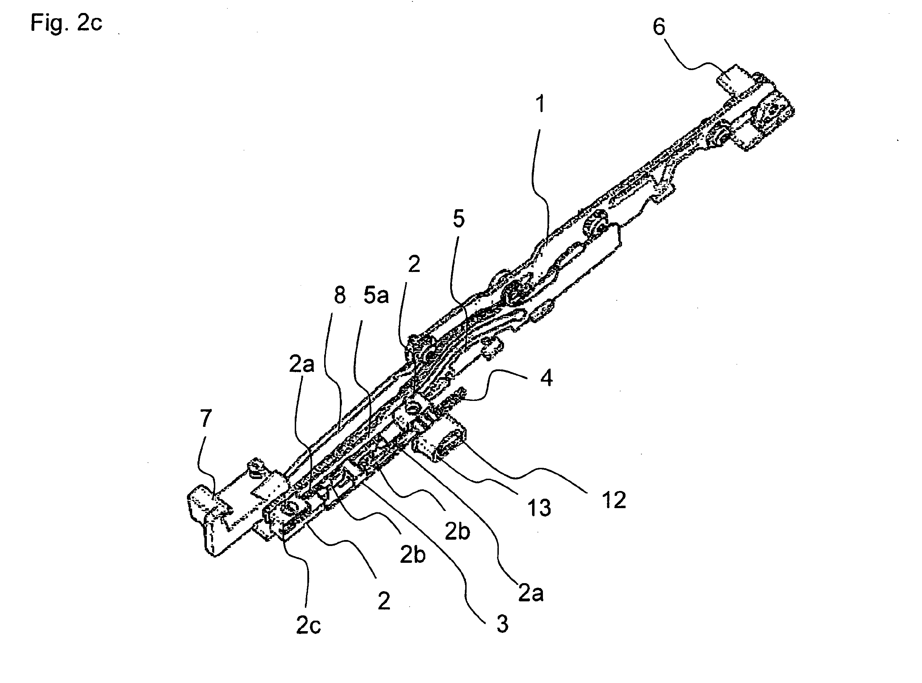

Fig. 2c zeigt eine weitere isometrische Gesamtdarstellung der Komponenten der erfindungsgemäßen Mechanik in einer weiteren Stellung. In dieser Darstellung sind beide Mitnehmer 2 an das Antriebselement 3 gekoppelt. In dieser Stellung können beispielsweise Deckel und Sonnenschutz bewegt werden, welche über die Aufnahme 2c der Mitnehmer 2 angebunden werden.

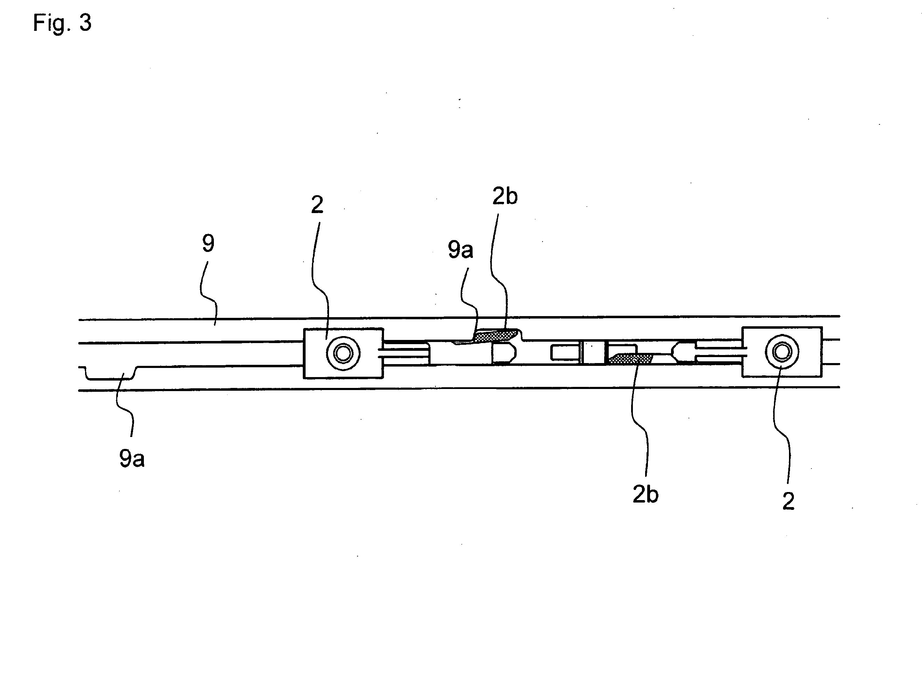

Fig. 3 zeigt eine Draufsicht auf das starre Führungselement mit zwei Mitnehmern. In dieser Darstellung ist das starre Führungselement 9 mit zwei Rastlöchern 9a dargestellt. Ein Mitnehmer 2 ist mit der Rastnase 2b in einem Rastloch 9a fixiert. Ein weiterer Mitnehmer 2 ist an das Antriebselement 3 gekoppelt.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Deckelbefestigung
- 2: Mitnehmer
- 2a: Feder
- 2b: Rastnase
- 2c: Aufnahme
- 3: Antriebselement
- 4: Kabel
- 5: Kulisse
- 5a: Mitnehmer Deckel
- 6: Lager vorn
- 7: Lager hinten
- 8: Verbindungsteil
- 9: starres Führungselement
- 9a: Rastloch
- 10: Deckel
- 11: Sonnenschutz
- 12: Verbinder
- 13: Mitnehmer Sonnenschutz

## Patentansprüche

1. Mechanik für Schiebedächer
- mit zumindest einer Kulisse (5),
- mit zumindest einem Verbindungsteil (8), welches in der Kulisse (8) und in dem zumindest einem Lager hinten (7) beweglich gelagert ist,
- mit zumindest einer Deckelbefestigung (1), welche in dem zumindest einem Lager vorn (6) und dem Verbindungsteil (8) beweglich gelagert ist,
- mit zumindest einem starren Führungselement (9),
- wobei mit dem zumindest einem Antriebselement (3) zwei Mitnehmer (2) nacheinander und/oder zeitgleich entlang dem zumindest einem starren Führungselement (9) bewegt werden, wobei
- das Antriebselement (3) symmetrisch ausgebildet ist und sowohl an zwei Mitnehmer (2) gekoppelt, als auch baugleich in beiden starren Führungselementen (9) eines Schiebedaches eingesetzt werden kann,
**dadurch gekennzeichnet,**
- **dass** der Mitnehmer (2) eine Feder (2a), eine Rastnase (2b) und eine Aufnahme (2c) aufweist.

2. Mechanik für Schiebedächer nach Anspruch 1, **dadurch gekennzeichnet, dass** der Mitnehmer (2) mit der Rastnase (2b) sowohl in dem starren Führungselement (9) einrasten, als auch an das Antriebselement (3) gekoppelt werden kann.

3. Mechanik für Schiebedächer nach den Ansprüchen 1 bis 2, **dadurch gekennzeichnet, dass** durch baugleiche Mitnehmer (2) sowohl der zumindest eine Deckel (10), als auch der zumindest eine Sonnenschutz (11) bestätigt werden kann.

4. Mechanik für Schiebedächer nach den Ansprüchen 1 bis 3, **dadurch gekennzeichnet, dass** zumindest vier Mitnehmer (2) verwendet werden.

## Claims

1. Mechanism for sliding roofs
- having at least one guide track (5),
- having at least one connecting part (8), which is mounted such that it can be moved in the guide track (5) and in the at least one bearing at the rear (7),
- having at least one cover fastening (1), which is mounted such that it can be moved in the at least one bearing at the front (6) and in the connecting part (8),
- having at least one rigid guide element (9),
- wherein the at least one drive element (3) is used to move two drivers (2) one after the other and/or simultaneously along the at least one rigid guide element (9), wherein
- the drive element (3) is of symmetrical design and it is possible for it to be both coupled to two drivers (2) and used in a constructionally identical manner in the two rigid guide elements (9) of a sliding roof,
**characterized**
- **in that** the driver (2) has a spring (2a), a latching nose (2b) and a mount (2c).

2. Mechanism for sliding roofs according to Claim 1, **characterized in that**, by way of the latching nose (2b), it is possible for the driver (2) to be both latched in the rigid guide element (9) and coupled to the drive element (3).

3. Mechanism for sliding roofs according to Claims 1 and 2, **characterized in that** constructionally identical drivers (2) can be used to actuate both the at least one cover (10) and the at least one sunscreen (11).

4. Mechanism for sliding roofs according to Claims 1 to 3, **characterized in that** use is made of at least four drivers (2).

## Revendications

1. Mécanisme pour toits coulissants
- comprenant au moins une coulisse (5),
- comprenant au moins une partie de liaison (8) qui est montée de manière mobile dans la coulisse (5) et dans l'au moins un palier à l'arrière (7),
- comprenant au moins une fixation de panneau (1), laquelle est montée de manière mobile dans l'au moins un palier à l'avant (6) et dans la partie de liaison (8),
- comprenant au moins un élément de guidage rigide (9),
- deux dispositifs d'entraînement (2) étant déplacés l'un après l'autre et/ou simultanément le long de l'au moins un élément de guidage rigide (9) à l'aide de l'au moins un élément d'entraînement (3),
- l'élément d'entraînement (3) étant réalisé de manière symétrique et non seulement étant accouplé à deux dispositifs d'entraînement (2) mais aussi pouvant être utilisé avec une construction identique dans les deux éléments de guidage rigides (9) d'un toit coulissant,
**caractérisé en ce que**
- le dispositif d'entraînement (2) comprend un ressort (2a), un ergot d'encliquetage (2b) et un logement (2c).

2. Mécanisme pour toits coulissants selon la revendication 1, **caractérisé en ce que** le dispositif d'entraînement (2) peut, à l'aide de l'ergot d'encliquetage (2b), non seulement s'encliqueter dans l'élément de guidage rigide (9) mais aussi être accouplé à l'élément d'entraînement (3).

3. Mécanisme pour toits coulissants selon les revendications 1 et 2, **caractérisé en ce que** non seulement l'au moins un panneau (10) mais aussi l'au moins un pare-soleil (11) peuvent être actionnés au moyen de dispositifs d'entraînement (2) de construction identique.

4. Mécanisme pour toits coulissants selon les revendications 1 à 3, **caractérisé en ce qu'**au moins quatre dispositifs d'entraînement (2) sont utilisés.
